# EUROPÄISCHE PATENTANMELDUNG

(11) **EP 1 055 868 A2**
(43) Veröffentlichungstag der Anmeldung: **29.11.2000**
(21) Anmeldenummer: 00110583.2
(22) Anmeldetag: 18.05.2000
(51) Int. Cl.: F21S 8/10

(54) **Beleuchtungseinrichtung für Fahrzeuge**

(30) Priorität: 22.05.1999 DE 29909033 U
(71) Anmelder: Hella KG Hueck & Co., 59552 Lippstadt (DE)
(72) Erfinder: Eichhorn, Karsten, Dr., 59320 Ennigerloh (DE); Korff, Detlef, 59557 Lippstadt (DE); Topp, Ewald, 59609 Anröchte (DE); Lachmayer, Roland, Dr., 59505 Bad Sassendorf (DE)

(57) **Zusammenfassung**

Eine Beleuchtungseinrichtung für Fahrzeuge weist einen schalenförmigen Einkoppelreflektor (1) mit einem inneren (2) und einem äußeren (3) Brennort auf. Im inneren Brennort (2) des Einkoppelreflektors (1) ist eine Lichtquelle (4) angeordnet, der mindestens zwei Lichtleiter (5,6) mit einer Lichteinkoppelfläche (7) zugewandt ist. Die Lichtleiter (5,6) sind mit zur äußeren Fahrzeugbeleuchtung dienenden Lichtmodulen verbindbar. Durch eine Stellvorrichtung (8) ist jeweils einer der Lichtleiter (5,6) in Funktion schaltbar. Der Einkoppelreflektor (1) ist durch eine Stellvorrichtung (8) um eine durch seinen inneren Brennort (2) gehende Schwenkachse (9) verstellbar. Die Lichteinkoppelflächen (7) der Lichtleiter (5,6) sind auf einem Kugelabschnitt angeordnet, dessen Mittelpunkt mit dem inneren Brennort (2) des Einkoppelreflektors (1) zusammenfällt.

## Beschreibung

Die Erfindung betrifft eine Beleuchtungseinrichtung für Fahrzeuge mit einem schalenförmigen Einkoppelreflektor, welcher einen inneren und äußeren Brennort aufweist, mit einer im inneren Brennort des Einkoppelreflektors angeordneten Lichtquelle, mit mindestens zwei Lichtleitern, die mit einer Lichteinkoppelfläche der Lichtquelle zugewandt sind und mit zur äußeren Fahrzeugbeleuchtung dienenden Lichtmodulen verbindbar sind und mit einer Stellvorrichtung, durch die jeweils einer der Lichtleiter in Funktion schaltbar ist.

Eine solche Beleuchtungseinrichtung für Fahrzeuge ist aus der EP 0 562 279 B1 bekannt. Die Beleuchtungseinrichtung weist einen schalenförmigen Koppelreflektor auf, zwischen dem und zwei Lichtmodulen jeweils ein Lichtleiter verläuft. Als Lichtmodule dienen ein Fern- und ein Abblendlichtscheinwerfer. Der Einkoppelreflektor weist einen inneren und äußeren Brennort auf. Die beiden Lichtleiter weisen eine dem Einkoppelreflektor zugewandte Lichteinkoppelfläche auf und sind an den die Einkoppelflächen aufweisenden Enden an einer Halteplatte einer Stellvorrichtung befestigt. Die Halteplatte ist durch einen elektrischen Steiler der Stellvorrichtung quer zur optischen Achse verschiebbar oder um eine parallel zur optischen Achse verlaufende Achse des Einkoppelreflektors drehbar. Durch diese Stellvorrichtung sind beide Lichtleiter in zwei Stellungen einstellbar. In beiden Stellungen liegt immer einer der beiden Lichtleiter mit einer Lichteinkoppelfläche angrenzend zum äußeren Brennort des Einkoppelreflektors. Hierbei ist es nachteilig, daß zur Aufnahme der Stellvorrichtung ein großvolumiges Gehäuse notwendig ist, um die Funktion der Stellvorrichtung sicherzustellen.

Aufgabe der Erfindung ist es, die im Oberbegriff des Anspruchs 1 beschriebene Beleuchtungseinrichtung für Fahrzeuge derart zu gestalten, daß ein variables Überblenden von einer Lichtfunktion zur anderen auch bei mehreren Lichtleitern sicher ist und darüber hinaus eine kompaktbauende Stellvorrichtung möglich ist. Diese Aufgabe wird nach der Erfindung dadurch gelöst, daß der Einkoppelreflektor mit der Stellvorrichtung gekoppelt ist und mindestens eine durch seinen inneren Brennort gehende Schwenkachse aufweist, wobei die Lichteinkoppelflächen der Lichtleiter auf einem Kugelabschnitt angeordnet sind, dessen Mittelpunkt mit dem inneren Brennort des Einkoppelreflektors zusammenfällt. Da durch die Stellvorrichtung der Reflektor verschwenkt wird, ist die Dimensionierung der Stellvorrichtung nicht, wie bei der aus der EP 0 562 279 B1 bekannten Beleuchtungseinrichtung, von der Anzahl der Lichtleiter abhängig.

Damit bei dem Lichtleiter, dessen Lichtfunktion ausgeschaltet ist, kein direkt aus der Lichtquelle austretendes Licht einkoppeln kann, ist zwischen dem Einkoppelreflektor und den Lichtleitern eine Blende angeordnet, welche an dem Reflektor befestigt ist und eine Lichtdurchtrittsöffnung aufweist, durch welche hindurch die optische Achse des Einkoppelreflektors verläuft. Die optische Achse des Einkoppelreflektors sollte zentral durch die Lichtdurchtrittsöffnung der Blende verlaufen. Die Lichtdurchtrittsöffnung der Blende liegt immer benachbart zu der Lichteinkoppelfläche des Lichtleiters, dessen Lichtfunktion eingeschaltet ist. Hierbei ist es weiterhin vorteilhaft, wenn die Blende ein bogenförmiger Streifen ist, dessen Mittelpunkt mit dem inneren Brennort des Einkoppelreflektors zusammenfällt. Der Einkoppelreflektor, die Stellvorrichtung und die Lichteinkoppelelemente der Lichtleiter weisen eine kompakte Einheit auf, wenn die Lichteinkoppelelemente in Aufnahmeöffnungen eines Gehäuses eingreifen, in dessen Inneren der Einkoppelreflektor angeordnet ist und das zur Halterung der Stellvorrichtung dient, wobei die Schwenkachse des Einkoppelreflektors durch an dem Gehäuse befestigten Lager bestimmt ist. Dadurch sind die Lager der Stellvorrichtung, der Einkoppelreflektor selbst und die Einkoppelflächen der Lichtleiter geschützt im Inneren des Gehäuses angeordnet.

Bei einer besonders vorteilhaften Weiterbildung der Erfindung sind mit jedem Lichteinkoppelelement der Lichtleiter zwei Lichtauskoppelelemente verbunden. Die Lichtauskoppelelemente führen jeweils zu einem Lichtmodul. Als Lichtmodule können Fern- und Abblendscheinwerfer dienen.

Bei sehr vielen Lichtleitern kann es notwendig sein, daß es nicht ausreichend ist, den Reflektor nur um eine einzige Achse zu schwenken. Hierbei ist es dann vorteilhaft, wenn der Einkoppelreflektor durch ein kardanisches Gelenk gehaltert ist, welches zwei Schwenkachsen für den Einkoppelreflektor bildet.

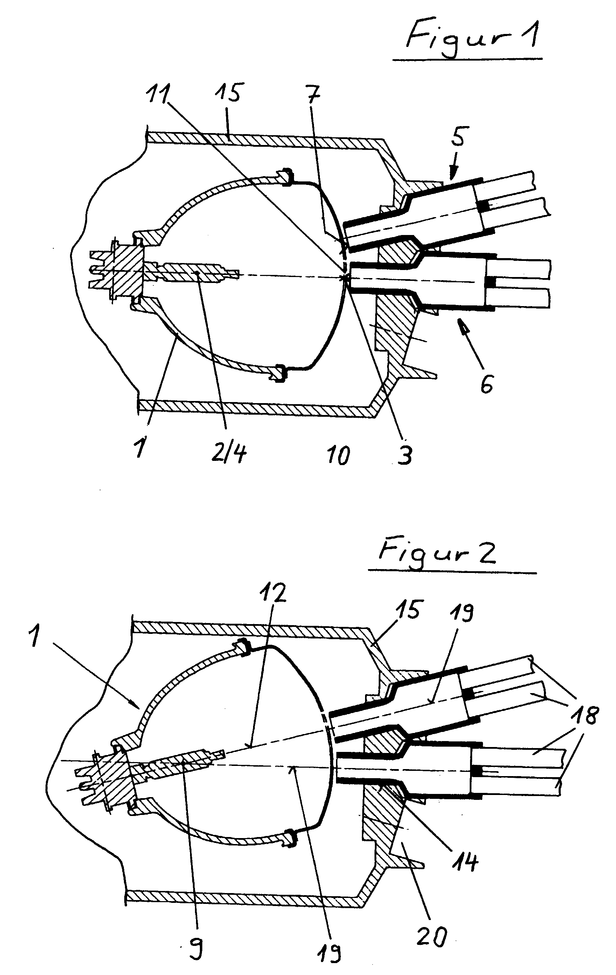

In der Zeichnung ist ein Ausführungsbeispiel nach der Erfindung dargestellt, und zwar zeigen
- Figur 1: einen mittleren horizontalen Längsschnitt durch eine Beleuchtungseinrichtung für Fahrzeuge mit einem verschwenkbaren Reflektor, welcher eine von zwei Stellungen einnimmt und auf einen von zwei Lichtleitern ausgerichtet ist,
- Figur 2: die Beleuchtungseinrichtung von Figur 1 mit dem verschwenkbaren Reflektor in seiner anderen Stellung,

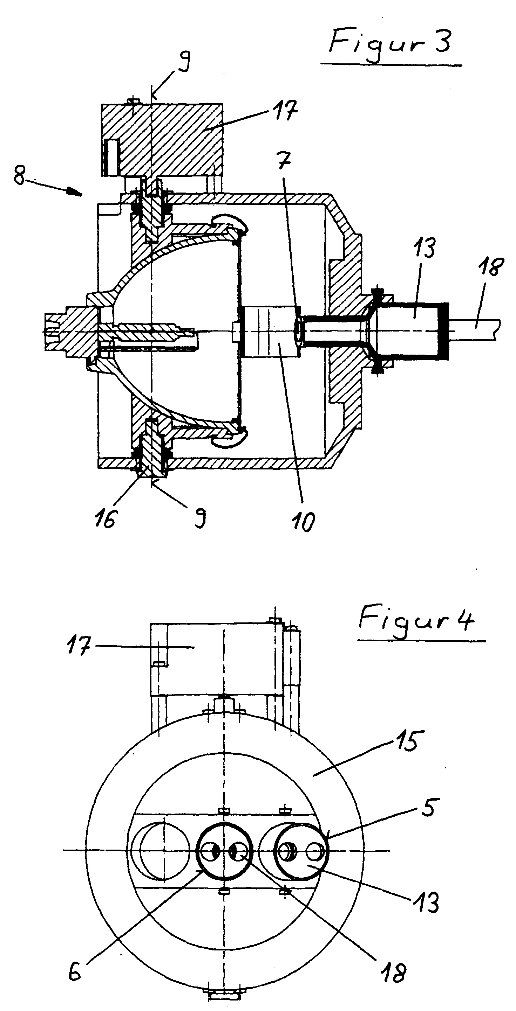

- Figur 3: einen mittleren vertikalen Längsschnitt durch die Beleuchtungseinrichtung von Figur 1 und
- Figur 4: eine Vorderansicht auf die Beleuchtungseinrichtung von Figur 1.

Die Beleuchtungseinrichtung für Fahrzeuge weist ein aus Kunststoff bestehendes Gehäuse 15 auf, in welchem ein ellipsoidförmiger Einkoppelreflektor 1 angeordnet ist. Der Einkoppelreflektor 1 weist in seinem Scheitelbereich eine Öffnung zur Aufnahme einer Lichtquelle 4 auf, welche von einer Glühlampe oder einer Gasentladungslampe gebildet ist. Der Einkoppelreflektor ist um eine vertikale Schwenkachse 9 in zwei Stellungen verstellbar. Die Schwenkachse 9 ist von zwei Lagern 16 gebildet, welche an der oberen bzw. unteren Seitenwand des Gehäuses 15 gehaltert sind. Die Lager 16 gehören zusammen mit einem elektrischen Steller 17 zu einer Stellvorrichtung 8. Der Steller 17 ist außen an der oberen Seitenwand des Gehäuses 15 befestigt und greift in eine Öffnung des oberen Lagers 16 ein. In die vordere Seite des Gehäuses 15 sind zwei Aufnahmeöffnungen 14 eingebracht, in welche jeweils ein Lichteinkoppelelement 13 eines Lichtleiters 5 bzw. 6 eingreift. Die Lichteinkoppelelemente 13 sind jeweils mit zwei Lichtauskoppelelementen 18 verbunden, welche jeweils zu einem nicht dargestellten Lichtmodul führen. Als Lichtmodule können Fern- und Abblendscheinwerfer dienen. Die abgeblendeten Scheinwerfer können eine symmetrische oder asymmetrische Lichtfigur erzeugen. Die Lichtleiter 5 und 6 ragen mit einem freien Endabschnitt ihrer Lichteinkoppelelemente 13 in das innere des Gehäuses 15 hinein und weisen eine dem Einkoppelreflektor 1 zugewandte Lichteinkoppelfläche 7 auf. Die Mittelachsen 19 der Lichteinkoppelelemente 13 gehen zentral durch die Lichteinkoppelflächen 7 hindurch und schneiden sich im dem Brennort 2 bzw. der Schwenkachse 9. In beiden Stellungen des Einkoppelreflektors 1 fallen die optische Achse 12 des Einkoppelreflektors 1 mit einer der Mittellinien 19 der beiden Lichteinkoppelelemente 13 zusammen. An dem vorderen Rand des Einkoppelreflektors 1 ist eine streifenförmige Blende 10 angebracht, welche bogenförmig verläuft. Der Bogen ist von einem Abschnitt eines Zylinders mit einer kreisförmigen Deckfläche gebildet. Die Mittelachse des Zylinders fällt mit der Schwenkachse 9 zusammen. Die bogenförmige Blende 10 weist eine Lichtdurchtrittsöffnung 11 auf, welche in beiden Stellungen des Reflektors 1 benachbart zu einer der Lichteinkoppelfläche 7 der Lichtleiter 4 bzw. 5 liegt. In dem angedeuteten Bereich 20 der vorderen Seite des Gehäuses 15 ist, falls gewünscht, ein dritter Lichtleiter einsetzbar.

### Bezugszeichenliste

- 1.: Einkoppelreflektor
- 2.: innerer Brennort
- 3.: äußerer Brennort
- 4.: Lichtquelle
- 5.: Lichtleiter
- 6.: Lichtleiter
- 7.: Lichteinkoppelfläche
- 8.: Stellvorrichtung
- 9.: Schwenkachse
- 10.: Blende
- 11.: Lichtdurchtrittsöffnung
- 12.: optische Achse
- 13.: Lichteinkoppelelemente
- 14.: Aufnahmeöffnungen
- 15.: Gehäuse
- 16.: Lager
- 17.: Steller
- 18.: Lichtauskoppelelemente
- 19.: Mittelachsen
- 20.: Bereich

## Patentansprüche

1. Beleuchtungseinrichtung für Fahrzeuge mit einem schalenförmigen Einkoppelreflektor (1), welcher einen inneren und äußeren Brennort (2 und 3) aufweist, mit einer im inneren Brennort (2) des Einkoppelreflektors (1) angeordneten Lichtquelle (4), mit mindestens zwei Lichtleitern (5 und 6), die mit einer Lichteinkoppelfläche (7) der Lichtquelle (4) zugewandt sind und mit zur äußeren Fahrzeugbeleuchtung dienenden Lichtmodulen verbindbar sind und mit einer Stellvorrichtung (8), durch die jeweils einer der Lichtleiter (5 und 6) in Funktion schaltbar ist, dadurch gekennzeichnet, daß der Einkoppelreflektor (1) mit der Stellvorrichtung (8) gekoppelt ist und mindestens eine durch seinen inneren Brennort (2) gehende Schwenkachse (9) aufweist, wobei die Lichteinkoppelflächen (7) der Lichtleiter (5 und 6) auf einem Kugelabschnitt angeordnet sind, dessen Mittelpunkt mit dem inneren Brennort (2) des Einkoppelreflektors (1) zusammenfällt.

2. Beleuchtungseinrichtung nach Anspruch 1, dadurch gekennzeichnet, daß an dem Einkoppelreflektor (1) eine Blende (10) angeordnet ist, die eine Lichtdurchtrittsöffnung (11) aufweist, durch die hindurch die optische Achse (12) des Einkoppelreflektors (1) hindurchgeht.

3. Beleuchtungseinrichtung nach Anspruch 2, dadurch gekennzeichnet, daß die Blende (10) ein bogenförmiger Streifen ist, welcher koaxial zur Schwenkachse (9) des Einkoppelreflektors (1) verläuft und der benachbart zu den Lichteinkoppelflächen (7) der Lichtleiter (5 und 6) angeordnet ist.

4. Beleuchtungseinrichtung nach einem der Ansprüche 1 bis 3, dadurch gekennzeichnet, daß Lichteinkoppelelemente (13) der Lichtleiter (5 und 6) in Aufnahmeöffnungen (14) eines Gehäuses (15) eingreifen, in dessen Inneren der verschwenkbare Einkoppelreflektor (1) angeordnet ist und das zur Halterung der Stellvorrichtung (8) dient.

5. Beleuchtungseinrichtung nach einem der Ansprüche 1 bis 4, dadurch gekennzeichnet, daß die Schwenkachse (9) des Einkoppelreflektors (1) durch an dem Gehäuse (15) angeordnete Lager (16) bestimmt ist.

6. Beleuchtungseinrichtung nach einem der Ansprüche 1 bis 5, dadurch gekennzeichnet, daß die Stellvorrichtung (8) einen elektromotorischen Steller (19) aufweist.

7. Beleuchtungseinrichtung nach einem der Ansprüche 1 bis 6, dadurch gekennzeichnet, daß jeder Lichtleiter (5 und 6) ein Lichteinkoppelelement (13) und zwei Lichtauskoppelelemente (18) aufweist, die mit jeweils einem Lichtmodul verbunden sind.

8. Beleuchtungseinrichtung nach einem der Ansprüche 1 bis 7, dadurch gekennzeichnet, daß als Lichtquelle (4) eine Gasentladungslampe dient.

9. Beleuchtungseinrichtung nach einem der Ansprüche 1 bis 9, dadurch gekennzeichnet, daß die Mittelachsen (19) der Lichteinkoppelflächen (7) bzw. von den Lichteinkoppelflächen (7) aufweisenden Lichteinkoppelelementen (13) der Lichtleiter (5 und 6) sich im inneren Brennort (2) des Einkoppelreflektors (1) schneiden.
